# EUROPEAN PATENT SPECIFICATION

(11) **EP 3 599 191 B1**
(45) Date of publication and mention of the grant of the patent: **28.06.2023**
(21) Application number: 19188185.3
(22) Date of filing: 24.07.2019
(51) Int. Cl.: B65G 17/32, B65G 21/22, B65G 21/18

(54) **CONVEYOR APPARATUS**
FÖRDERERVORRICHTUNG
DISPOSITIF DE TRANSPORT

(30) Priority: 27.07.2018 IT 201800007586
(43) Date of publication of application: 29.01.2020
(73) Proprietor: Tiesse S.r.l., 43037 Lesignano de' Bagni (PR) (IT)
(72) Inventor: SARTORI, Elmo, 43037 Lesignano de' Bagni (PR) (IT)
(74) Representative: Fanzini, Valeriano

(56) References cited:
- WO-A1-2012/068695
- DE-U1-202004 017 986
- GB-A- 2 148 827
- US-A- 3 627 109
- US-A- 6 113 273

## Description

### FIELD OF APPLICATION OF THE INVENTION

The present finding relates to the field of the conveyors for articles or packages, such as, for example, bottles, cans, boxes, bundles, crates, etc., and in particular products passing on conveyors that are part of lines, which are adapted to the manufacturing and/or filling and/or packaging of said articles.

### STATE OF THE ART

The container manufacturing and/or filling and/or packaging lines comprise a series of conveyors belts that allow the transit of said articles, from a working station to the other one, or from a machine to the next one, where such machines (for example, blower, filler, labelling machine, shrink-wrapping machines, palletizer, etc.) are arranged according to a sequence dictated by the manufacturing/filling/packaging process. Said conveyors have also the function to transfer the packages by lifting them to different heights, to reach working stations that are arranged on different levels of the building. Often, the vertical height of said conveyors has also the purpose to create package accumulation areas that do not will excessively take the building area.

The conveyors obtained in a spiral elevator/descender shape fall within this type.

Said conveyor apparatuses of the spiral elevator/descender type have a frame that generally extends helically about a central axis, and they generally allow both transferring the packages vertically, and carrying out a gradual lifting, which is suitable also for unstable products.

A critical aspect of said conveyors is given exactly by the spiral configuration, which involves significant friction forces between the conveyor belt and the guide means on which it runs. There are several types of solutions aimed to reduce the sliding friction, such as, for example, the use of conveyor belts having bearings that keep them driving, converting the sliding friction into a rolling friction.

In addition to the centripetal forces due to the helical configuration, also the forces due to the weight of the conveyor belt and the conveyed packages, which will generate further friction forces to be overcome, unload on the guide means. These latter forces are generally due to a sliding friction between the chain meshes composing the conveyor belt and the guide conveyor belts.

Therefore, these are conveyor apparatuses that require driving means having significant powers, a large part of which is required to overcome friction forces. Furthermore, in order to avoid that the chain meshes of the conveyor belt may lift during the sliding, due to unevenly distributed loads, chain meshes are often needed, which have means -referred to as TABs- that are adapted to cooperate with corresponding holding means. Said solution makes both the configuration of the chain meshes and the guide means more complex, in addition to work mainly by a sliding friction, thus creating larger workloads.

Furthermore, the same configuration of the sliding means and the respective guides does not allow obtaining conveyor belts of a reduced size.

For example, document GB2148827 discloses a conveyor belt with four roller as sliding means. This solution is complex and not allow obtaining conveyor belts of a reduced size. The same for documents US6113273 where the sliding means are three rollers.

Furthermore, in order to properly drive the conveyor belt in all directions, a number of guide members are necessary, which involve complex assembling operations, also with the risk of positioning errors, which can create excessive clearances or excessive interference, to the detriment of the proper operation of the conveyor apparatus. WO2012068695A1 discloses a conveyor apparatus according to the preamble of claim 1.

### DISCLOSURE AND ADVANTAGES OF THE INVENTION

The technical problem underlying the present invention is to provide a conveyor apparatus that is structurally and functionally devised to overcome one or more of the limitations set forth above with reference to the mentioned prior art.

Within the scope of the above-mentioned problem, main object of the invention is to develop a conveyor apparatus that allows improving the sliding of the conveyor belt by reducing the friction forces involved.

A further object of the invention is also to provide to the art a conveyor apparatus within the scope of a rational solution, which allows a simple and precise assembly and maintenance.

Such and other objects are achieved by virtue of the characteristics of the invention set forth in the independent claim 1. The dependent claims outline preferred and/or particularly advantageous aspects of the invention.

The present invention provides a conveyor apparatus for the transport of packages along a respective conveying path, comprising at least one frame, guide means, and a conveyor belt slidably supported on said guide means.

Said conveyor belt comprises engaging means that are slidable on said guide means and comprising at least one first rotatable member. Furthermore, it comprises a plurality of chain meshes mutually connected in an articulated manner through corresponding towing and connecting means, where each chain mesh of the conveyor belt transversally extends and has a respective upper face, defining a substantially planar surface suitable to receive the packages.

The guide means comprise a support surface parallel to the planar surface and facing upwardly, which is configured to engage with the towing and connecting means by bearing the conveyor belt load, and at least one first side centering surface suitable to engage the first rotatable member, which first side centering surface faces the support surface, with which, by extending, it defines an angle.

Thanks to this solution, the friction forces present between the conveyor belt and the guide means are mainly of the type that the friction forces are reduced passing from sliding to rolling force, due to the presence of the rotatable members.

Furthermore, since the side centering surface faces the support surface, the rotatable member is interposed between the connecting means and said side centering surface.

The advantage of this solution is to make a conveyor belt of a reduced dimension, thus allowing reducing the width of each individual chain mesh. It is thereby possible to make conveyor belts of a reduced width, which are generally used side-by-side for the differential transport of the packages.

Another aspect of the invention is to relieve the entire weight of the conveyor belt and the packages, substantially by the contact of the towing and connecting means with the support surface, parallel to the planar surface and facing upwardly. This aspect also allows limiting the footprint of the guide means, hence the dimensions of the conveyor belt.

A preferred embodiment provides that the towing and connecting means are arranged in the proximity of a lower face and/or in the proximity of a symmetry plane of the chain meshes. Furthermore, preferably, connecting means are of the roller chain type.

By virtue of this aspect, it is possible to better unload the conveyed weight. In fact, since the towing and connecting means are in the proximity of the symmetry plane of the chain meshes, and since the weight of the conveyor belt and the packages is relieved from the towing and connecting means to the support surface, any load displacements on the chain meshes are reduced.

In addition to this, there is the advantage that, since the towing and connecting means are preferably of the roller chain type, the friction is considerably reduced, since the chain rollers resting on the support surface mainly work by a rolling friction.

It is thereby possible to make conveyor apparatuses that need a drive having lower powers with respect to the prior-art solutions.

According to the invention, the guide means comprise a second side centering surface defining a respective angle to the support surface.

This second side centering surface is provided for on the towing and connecting means side, opposite the one of the first side centering surface and cooperating with a corresponding second rotatable member.

Said second rotatable member is provided for on the same engaging means, and it is located on the side opposite the one of the first rotatable member with respect to the towing and connecting means.

Furthermore, the angle defined by said second side centering surface with said support surface is preferably equal and oriented with respect thereto opposite the angle that said first side centering surface has with the same support surface.

Furthermore, said angles are preferably oriented so as to exert on the respective chain mesh a further holding action in a perpendicular direction towards said support surface.

Thanks to this solution, a conveyor belt tends to remain engaged in the guide means without the need to make chain meshes having TAB members, to remain in place.

According to a preferred embodiment, the guide means are defined by a corresponding body having a preferably planar lower base, from which a central protrusion defining said support surface and at least one first side protrusion defining the side centering surface extend.

The body preferably has also a second side protrusion defining the second side centering surface, which is provided for on the side of said central protrusion opposite the one of said first side protrusion.

A possible embodiment provides for that the respective first and second side centering surfaces are defined at a portion of the respective first and second side protrusions, which is a recess of a respective inner face of the same first and second side protrusions, facing said central protrusion.

Said recess is configured to house a portion of the rotatable member.

Thanks to this solution, it is possible to better ensure the proper position of the conveyor belt, by making a simpler conveyor belt, since it is not necessary to make chain meshes with TAB members also in the presence of heavy load conditions, such as, for example, unbalanced loads.

In fact, in order to avoid that the conveyor belt may lift during the sliding, the contact between the upper and/or lower surface of the rotatable member and a first and second holding surfaces of the recess is used.

Another aspect of the invention provides that the guide means can be made in a single piece. In this manner, the components to be assembled are reduced, thus facilitating the same assembly and the maintenance. Furthermore, since it is a single piece, the risk of positioning errors, which may create excessive clearances or excessive interferences, to the detriment of the proper operation of the conveyor apparatus is reduced.

### BRIEF DESCRIPTION OF THE FIGURES

This and other characteristics will be better highlighted by the following description of some embodiments illustrated by way of non-limiting example only, in the accompanying drawing figures.
- Figure 1: illustrates an axonometric view of a portion of a conveyor apparatus;
- Figure 2: illustrates a front sectional view of the conveyor belt and corresponding guide means;
- Figure 3: illustrates an axonometric view of a portion of the guide means;
- Figure 4: illustrates an axonometric view of a portion of the guide means on which a chain mesh of the conveyor belt is installed;
- Figure 5: illustrates a front view of a chain mesh of the conveyor belt with corresponding engaging means;

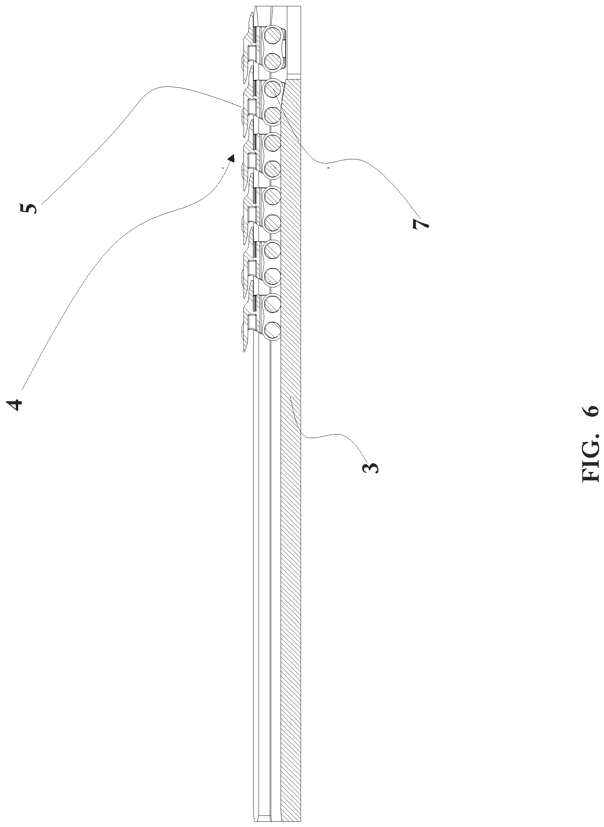

- Figure 6: illustrates a side sectional view of the conveyor belt and corresponding towing and connecting means 7 and guide means;
- Figure 7: illustrates an axonometric view of a spiral elevator/descender;

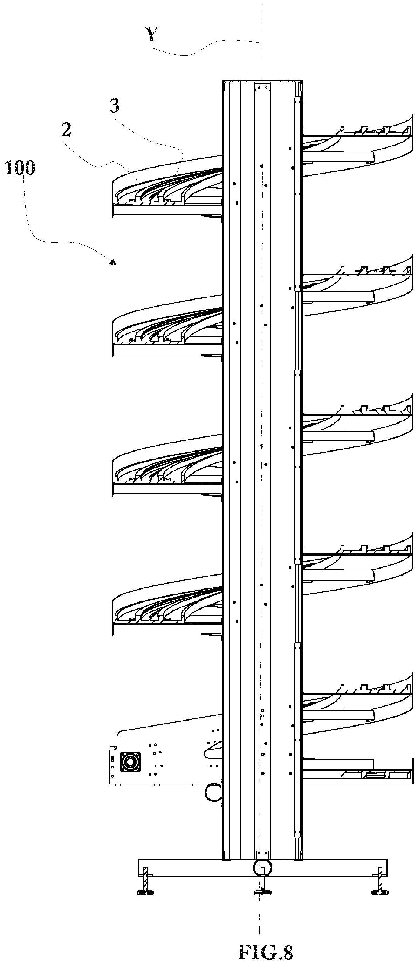

- Figure 8: illustrates a sectional view of a spiral elevator/descender.

### DESCRIPTION OF THE EMBODIMENTS

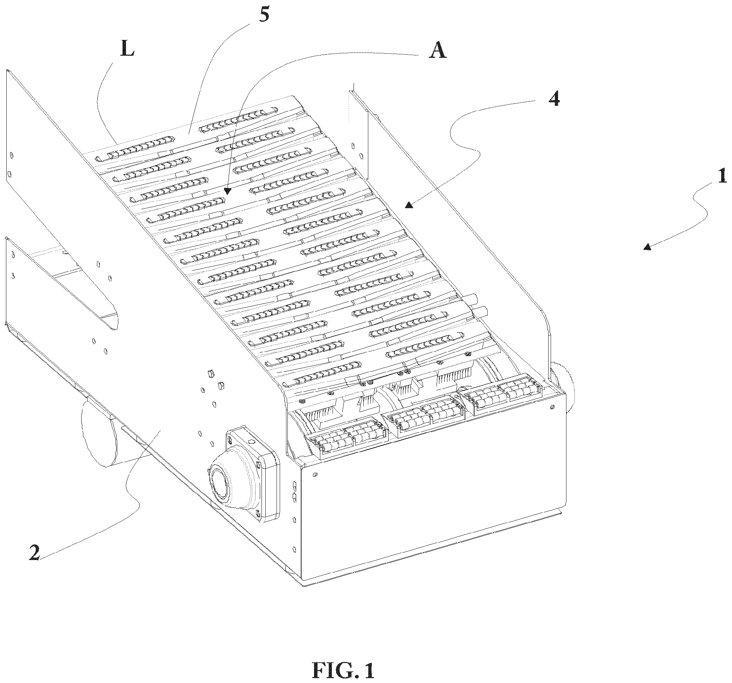

With particular reference to figure 1, a conveyor apparatus 1 is represented.

Said type of conveyor apparatus 1 is particularly suitable to transfer packages 200 of product, which are in single piece, such as bottles, cans, etc., or packaged, such as cartons, bundles, crates, etc.

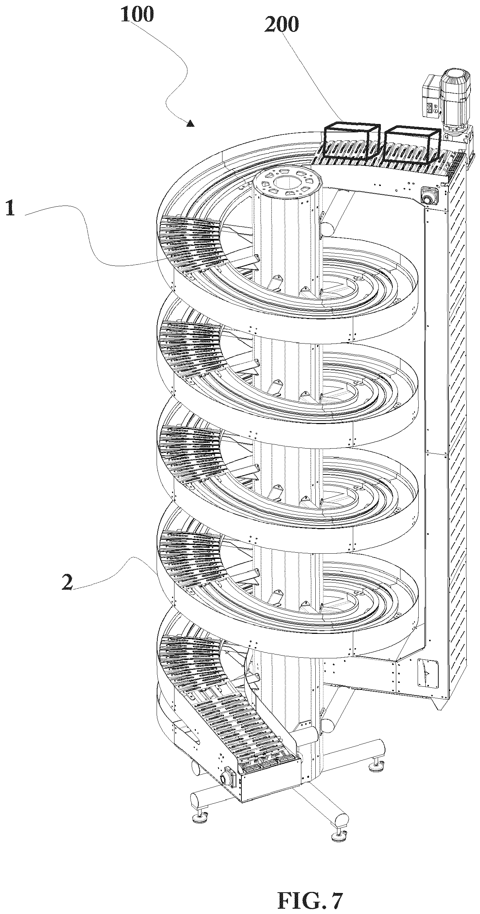

Furthermore, said conveyor apparatus 1 has technical characteristics that make it particularly suitable to be obtained in the shape of a spiral elevator/descender 100, as represented in figure 7.

Herein below, the application of conveyor apparatuses 1 of the spiral elevator/descender 100 type, which by the sake of simplicity will be referred to as spiral elevators 100, will be mainly referred to.

In general, the shape of spiral elevator 100 has a dual function:
- transferring the packages 200 vertically,
- carrying out a gradual lifting/lowering, also suitable to unstable products.

Therefore, the frame 2 of a spiral elevator 100 generally extends helically about a central axis Y.

However, said application has an exemplary, non-limiting value, therefore, possible different applications, such as flat or inclined, straight or curved conveyors are henceforth considered.

The conveyor apparatus 1 generally comprises a frame 2, configured to support guide means 3 on which a conveyor belt 4 of the modular chain type runs, onto which the packages 200 to be transferred are rested.

The conveyor apparatus 1 is shaped so as to transport the packages 200 along a determined path.

According to the invention, the conveyor apparatus 1 comprises at least:
- a frame 2
- guide means 3 adapted to be supported by the frame 2,
- a conveyor belt 4 slidably supported on said guide means 3.

In accordance with the invention, said conveyor belt 4 comprises a sequence of chain meshes 5 connected to each other by towing and connecting means 7.

The chain meshes 5 are connected by said towing and connecting means 7 so as to allow relative movements between one chain mesh 5 and the other. In fact, the chain meshes 5 are nearly hinged, being able to follow radii of curvature both on the horizontal plane and also in a vertical direction, enabling a spiral movement, hence the application on frames 2 of spiral elevators 100.

In accordance with the invention, each chain mesh 5 comprises an upper face 51, adapted to define a planar surface A suitable to receive the packages 200.

This lower face 52 contrasts this upper face 52. Said chain meshes 5 are transversally stretched and generally symmetric with respect to a symmetry plane X orthogonal to the planar surface A and directed according to the forwarding direction of the conveyor belt 4.

According to one aspect, the towing and connecting means 7 are arranged in the proximity of the lower face 52 of the chain meshes 5 and arranged in the proximity of a symmetry plane X of said chain meshes 5.

A preferred embodiment provides that, preferably on the lower face 52, engaging means 6 adapted to be mechanically connected to the guide means 3 are installed.

In particular, the guide means 3 cooperate with the engaging means 6 to slidably guide the chain meshes 5 by creating a forward path of the conveyor belt 4; said engaging means 6 comprise at least one first rotatable member 61.

In a formulation, the guide means 3 comprise, in combination, a support surface 35 and a first side centering surface 31.

The support surface 35 is parallel to the planar surface A and facing upwardly, it is configured to engage with the towing and connecting means 7 by bearing the load of the conveyor belt 4. Furthermore, the first side centering surface 31 is adapted to engage the first rotatable member 61, which first side centering surface 31 faces the support surface 35 with which, by extending, defines an angle α.

The towing and connecting means 7 slidably rest on the support surface 35.

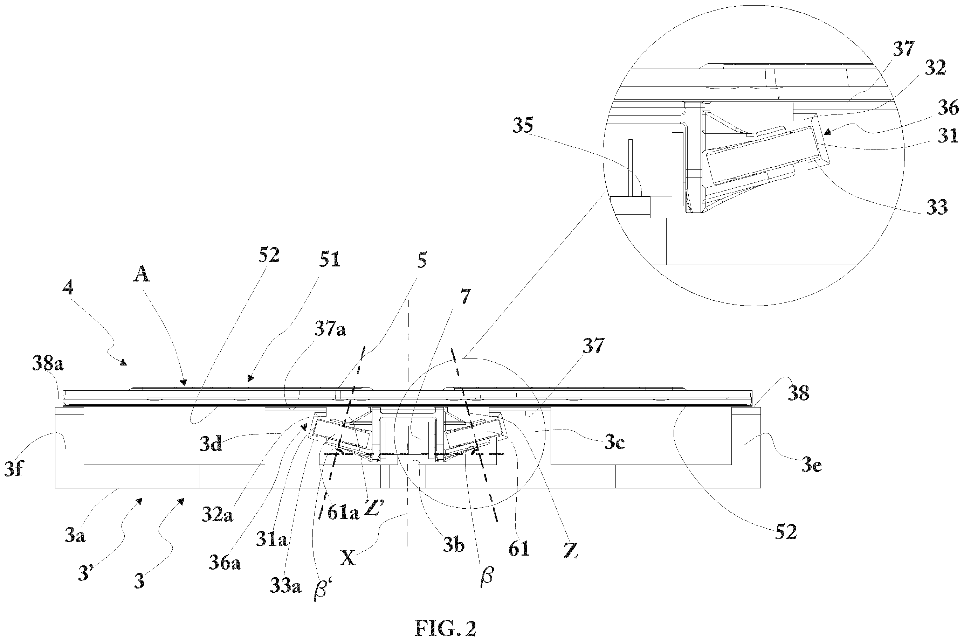

As shown in figure 2, the guide means 3 comprise a second side centering surface 31a defining a respective angle a' with the support surface 35, which is provided for on the side of the towing and connecting means 7 which is opposite the one of the first side centering surface 31 and cooperating with a corresponding second rotatable member 61a which is provided for on the same engaging means 6; said rotatable member 61a is positioned on the side opposite the one of said first rotatable member 61 with respect to the towing and connecting means 7.

Said angle a' defined by said second side centering surface 31a with said support surface 35 is preferably equal and oriented with respect thereto opposite the angle α which said first side centering surface 31 has with the same support surface 35; said angles α and a' are preferably oriented so as to exert on the respective chain mesh 5 a further holding action in a perpendicular direction towards said support surface 35.

An advantage due to the fact that the first and second side centering surfaces 31, 31a face the towing and connecting means 7 of the chain meshes 5 is related to the possibility of making engaging means 6 of a reduced dimension, which thus enables to reduce the width L of each single chain mesh 5.

By virtue of this solution, it is possible to make conveyor belts 4 of a reduced width, which are generally used side-by-side for a differential transport of the packages 200.

According to a possible embodiment said first and second side centering surfaces 31 and 31a are parallel to a rotational axis Z and Z' of the respective first and second rotatable members 61 and 61a and are configured to cooperate with a rotatable surface 62 and 62a of the first and/or second rotatable members 61 and 61a.

In particular, the first and second side centering surfaces 31 and 31a guide the rolling surface 62, 62a of the rotatable member 61 or 61a, being parallel to the axis Z, Z' and facing the towing and connecting means 7 of the chain meshes 5, respectively.

In this manner, the friction between engaging means 6 and guide means 3 is of the rolling type, which reduces the frictions; said frictions can be relevant above all in configurations of conveyor apparatuses 1 of the spiral elevator 100 type.

Consequently, the power to be installed in order to move the conveyor belt 4 is reduced.

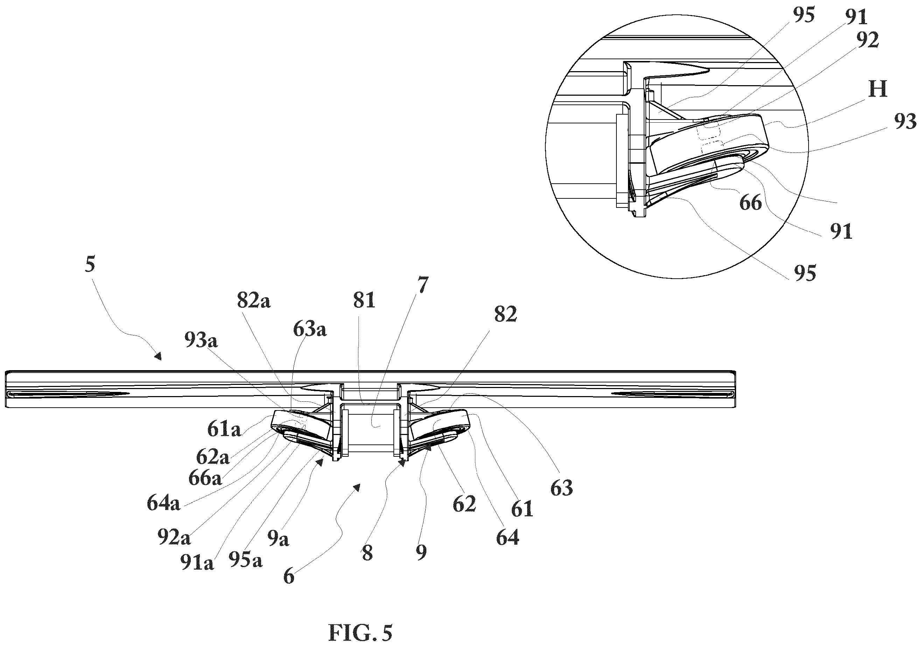

According to the load of the packages 200 to be transported or according to the radius of curvature or the helix pitch of the elevator 100, the engaging means 6 may provide further rotatable members. As represented in figures 2 and 5, the invention provides that the engaging means 6 comprise a first rotatable member 61 and a second rotatable member 61a. Said second rotatable member 61a is rotatable about the axis Z' and arranged in a position preferably symmetric to the first rotatable member 61 with respect to the symmetry plane X of the chain meshes 5, thus arranged on the opposite side of the towing and connecting means 7 with respect to the first rotatable member 61.

The conveyor belt 4 can be composed of a sequence of chain meshes 5 that provide different engaging means 6. In fact, the conveyor belt 4 can comprise both chain meshes 5 which provide engaging means 6 with the first rotatable member 61 and the second rotatable member 61a arranged on two sides of the towing and connecting means 7, alternated with other chain meshes 5 which provide engaging means 6 with only the first rotatable member 61 or only the second rotatable member 61a, thus only on one side of the towing and connecting means 7. Further variations can also provide to alternate chain meshes 5 that do not provide any rotatable member.

The first rotatable member 61 and the second rotatable member 61a are preferably rolling bearings.

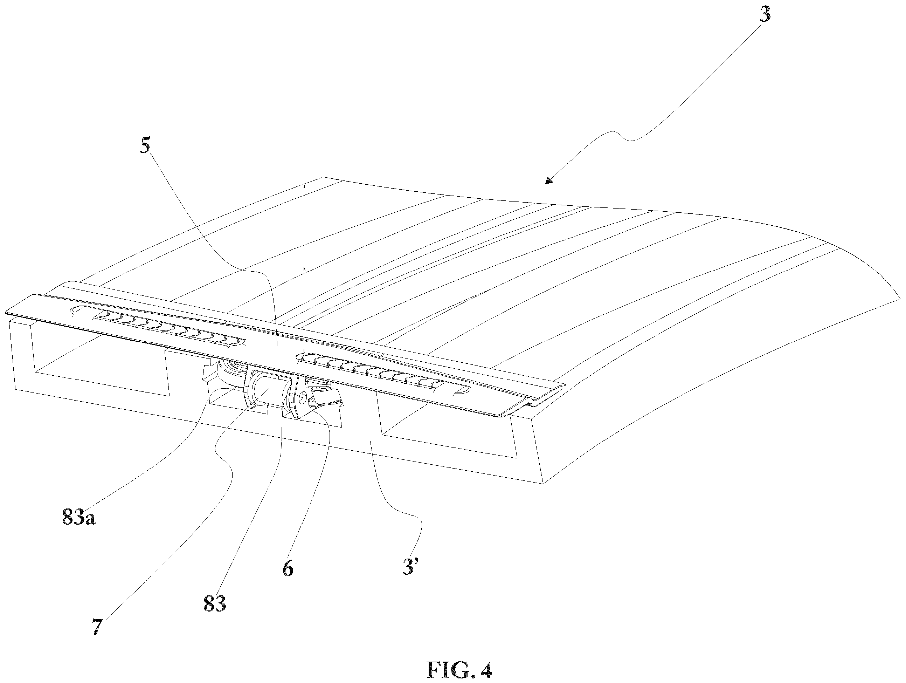

As represented in figures 2, 3 and 4, the guide means 3 preferably provide a body 3' comprising a preferably planar base 3a, from which a central protrusion 3b defining said support surface 35 and at least one first side protrusion 3c defining the side centering surface 31 extend.

The body 3' of said guide means 3 preferably has a second side protrusion 3d defining the second side centering surface 31a which is provided for on the side of said central protrusion 3b which is opposite the one of said first side protrusion 3c.

According to one aspect, the second side protrusion 3d is preferably equal and symmetric to the first side protrusion 3c with respect to the symmetry plane X and configured to cooperate with the second rotatable member 61a. The guide means generally comprise said second side protrusion 3d identical to the first side protrusion 3c so that it is always possible to install a possible second rotatable member 61a and to hold it to drive along the entire path, by balancing the loads on both the rotatable members 61 and 61a.

A characteristic provides that the respective first and second side centering surfaces 31, 31a are defined at a portion of the respective first and second side protrusions 3c, 3d, which is a recess 36, 36a of a respective inner face 37, 37a of the same first and second side protrusions 3c, 3d, facing said central protrusion 3b.

As represented in the embodiment shown in figure 2, the recess 36, 36a is preferably configured to house a portion of the rotatable member 61, 61a; said recess 36, 36a comprises at least one first holding surface 32, 32a inciding the first and second side centering surfaces 31, 31a, respectively, and facing downwardly and in the proximity of an upper surface 63, 63a of the corresponding first and second rotatable members 61, 61a.

Furthermore, preferably the recess 36, 36a comprises a second holding surface 33, 33a inciding the first and second side centering surface s31, 31a, respectively, and facing upwardly and in the proximity of a lower surface 64, 64a of the corresponding first and second rotatable members 61, 61a.

A preferred embodiment provides that the first holding surface 32, 32a is orthogonal to the respective first and second side centering surfaces 31, 31a.

Furthermore, preferably the second holding surface 33, 33a is orthogonal to the respective first and second side centering surfaces 31, 31a.

One possible embodiment provides that the first and second holding surface 32, 32a, 33, 33a are configured to contact a rotatable portion of the upper 63, 63a and lower 64, 64a surfaces of the corresponding first and second rotatable members 61, 61a.

Thanks to this solution, it is avoided that possible forces in a direction orthogonal to the planar surface A may excessively lift or incline the chain meshes 5. In fact, the distance between the first holding surface 32, 32a and the upper surface 63, 63a, as well as the distance between the second holding surface 33, 33a and the lower surface 64, 64a is in the order of millimeters or tenths of millimeter to allow a sliding with clearance of the rotatable member 61 and/or 61a, but at the same time to prevent possible excessive vertical displacements of the same rotatable members 61 and/or 61a. Furthermore, since the portions of upper 63, 63a and lower 64, 64a surfaces in which the contact takes place are preferably rotatable, there will be a not purely sliding friction which therefore enables a smooth sliding also under the action of forces orthogonal to the planar surface A.

Thanks to this solution, those members, which in technical jargon are referred to as TABs, are no longer necessary to hold the conveyor belt 4 in place.

Said TABs are generally integral to the chain meshes 5 and need corresponding holding means with which to cooperate, making the shape of both the chain meshes 5 and the guide means 3 more complex, in addition to work mainly by sliding friction and thus creating larger workloads.

According to one aspect of the invention and as represented in the figures 2, 3 and 4, the first and second side protrusions 3c, 3d of the guide means 3 comprise a resting surface 37, 37a, respectively, parallel to the planar surface A and facing upwardly, which are configured to possibly cooperate with the lower face 52 of the chain meshes 5.

In fact, on said resting surface 37, 37a the lower face 52 can rest and slide, for example when the chain meshes 5 inflect under the action of the weight force of the packages 200 or are subjected to unbalanced loads with respect to the symmetry plane X.

Thanks to said resting surface 37, 37a it is avoided that the chain meshes 5 may incline excessively because of the clearances and the loads, therefore sustaining an excessive flexural moment.

In the case that no loads are present, the lower face 52 should not rest on the resting surface 37, 37a, since all the forces should unload on the support surface 35 of the central protrusion 3b on which the towing and connecting means 7 rest.

A preferred embodiment provides that the towing and connecting means 7 are of the roller chain type.

Thanks to this solution, a prevalently rolling friction is created between the support surface 35 and the towing and connecting means 7.

Furthermore, preferably the dimension of the roller chain is 1 inch (25,4mm).

In this manner, it is possible to make conveyor apparatuses 1 having relevant lengths and/or relevant loads, both because the one-inch chain is able to sustain high tensile forces, and because the greater dimension of the chain roller allows exerting a smaller surface pressure on the support surface 35; in this manner, the sliding is facilitated and the deformation of said support surface 35 is reduced, avoiding possible consequent jammings.

The support surface 35 of the central protrusion 3b has preferably such a width as to support the chain roller without interfering with the meshes, i.e., it has a smaller width than the chain roller.

As represented in figures 2, 3 and 4, a further embodiment provides that the body (3') of the guide means 3 further comprises a first and a second outer protrusions 3e, 3f, arranged at a greater distance from the central protrusion 3b, with respect to the first and second side protrusions 3c, 3d, preferably symmetric.

Said first and a second outer protrusions 3e and 3f preferably carry a guide surface 38, 38a configured to cooperate with the lower face 52 of the chain meshes 5 and in particular with the portion of the lower face 52 farther away from the symmetry plane X and/or from the central protrusion 3b.

On said forth guide surface 38, 38a the lower face 52 rests and slides, for example when the chain meshes 5 inflect under the action of the weight force of the packages 200 or are subjected to unbalanced loads with respect to the symmetry plane X; in this manner, it is avoided that the chain meshes 5 may excessively incline because of the clearances and therefore sustain an excessive flexion moment most evident on the outermost portion of the chain meshes 5 with respect to the symmetry plane X.

In particular, a preferred implementation form provides that the body 3' of the guide means 3 is made in a single piece. Therefore, the base 3a, the central protrusion 3b, the first side protrusion 3c, the second side protrusion 3d can be obtained by processing a single material generally adapted to the sliding of the roller chains and the chain meshes 5, generally a plastic material. The fact that said guide means 3 are composed of a single piece simplifies the assembly and maintenance replacement operations, avoiding the need to position and secure many components.

Furthermore, it is thereby possible to optimize the clearances between the various parts that compose the conveyor apparatus 1: in fact, the guide means 3 will be made with the necessary tolerances to interface with the frame 2 and the conveyor belt 4, allowing an assembly and operation precision which would not be obtained if said guide means 3 were made with multiple members.

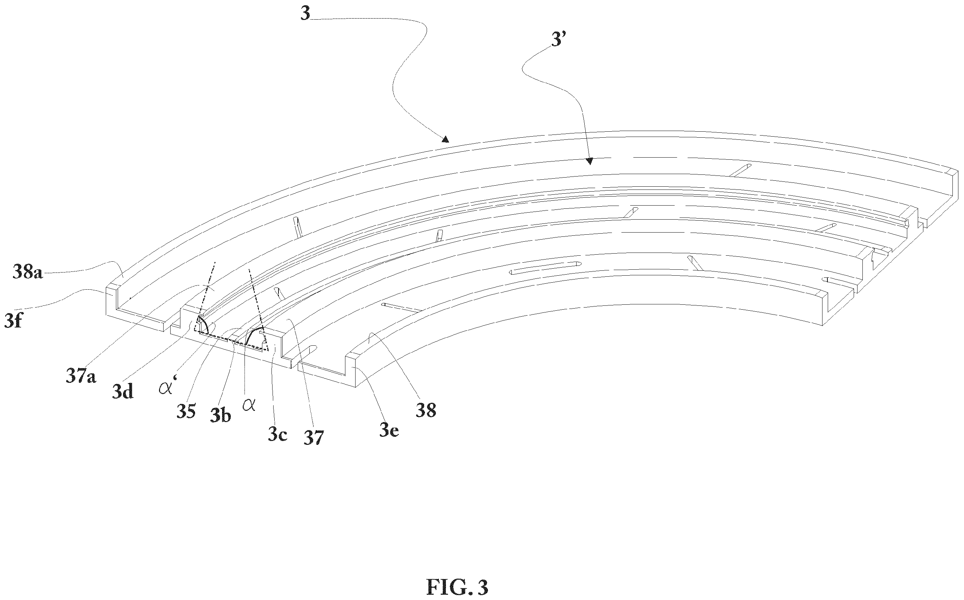

As represented in figure 3, the first and the second outer protrusions 3e and 3f can also be part of a single piece that compose the guide means 3.

Therefore, these are not distinct members that require an autonomous assembly.

In such a case also, all the above-mentioned advantages relative to having a single member to assembly are present.

A further advantage of this configuration relates to the fact that said guide means 3, by supporting with the first and the second outer protrusions 3e and 3f the outermost portions of the chain meshes 5, have such a dimension as to cover all the area underneath the conveyor belt 4.

Therefore, said guide means 3 may create a complete closure of the lower element to the conveyor belt 4, performing also the function of protective casing suitable to prevent the access of hands or fingers. Therefore, this configuration avoids the use of additional closure and protection members.

As represented in figure 5, according to a possible embodiment, the engaging means 6 comprise a support member 8 configured to mechanically connect the lower face 52 of each chain mesh 5 with the towing and connecting means 7.

Said support member 8 is of an inverted-U shape having a horizontal side 81 of a dimension suitable to hold the towing and connecting means 7 within two vertical sides 82, 82a.

The support member 8 preferably comprises, on the vertical sides 82, 82a of the inverted-U, holes 83, 83a to secure the towing and connecting means 7 to the chain meshes 5 in a hinged manner.

In particular, the towing and connecting means 7 of the roller chain type comprise pins 71 of an increased length, such as to insert into the holes 83 of the support member 8.

As shown in figure 5 the support member 8 is preferably made in a single piece with the respective chain mesh 5. Thanks to this aspect, the assembly times are decreased and the assembly precision is increased.

Furthermore, the support member 8 may comprise on at least one vertical side 82, 82a of the inverted-U holding means 9, 9a configured to rotatably support the first and/or second rotatable members 61 and 61a.

Said holding means 9 and/or 9a can comprise respectively small plates 91, 91a, preferably pairs of substantially planar small plates that are mutually parallel and orthogonal respectively, to the axes Z, Z', having such a mutual distance so as to limit the thickness h of the first and/or second rotatable members 61 and 61a. As highlighted in figure 5 at least one of the small plates 91 and/or 91a comprises an inner surface 92, 92a, facing the rotatable member 61, 61a, carrying a substantially cylindrical protrusion 93, 93a to insert in a through-hole 66, 66a of the rotatable members 61, 61a rotatably holding them.

In this manner, it is not necessary to insert a rotation pin which connects the holding means 9 and/or 9a to the rotatable members 61, 61a, but the rotatable members 61, 61a are held and kept free to rotate by means of said protrusions 93, 93a serving as a portion of pin. Also this aspect is aimed at simplifying and speeding up the assembly, by reducing the number of components involved.

A further preferred aspect provides that the rotatable members 61 and/or 61a protrude from the holding means 9, 9a to be able to insert in a recess 36 and/or 36a of the first and/or second side protrusions 3c, 3d. Therefore, the small plates 91, 91a will have a length such as not to cover the entire upper surface 63, 63a and the entire lower surface 64, 64a of the rotatable members 61 and 61a, and will extend just past the hole 66, 66a.

Said small plates 91 and/or 91a also provide an outer surface 94, 94a facing outwardly with respect to the rotatable member 61 and/or 61a, preferably carrying ribs 95, 95a configured to increase the stress resistance of each of the small plates 91, 91a.

As highlighted in figure 5 the holding means 9 and/or 9a are preferably arranged symmetric on both the vertical sides 82, 82a of the inverted-U of the support member 8 and preferably made in a single piece with the support member 8. In this manner, each chain mesh 5 provides that the support member 8 and/or the holding means 9 and/or 9a are obtained in a single piece, generally by moulding, by making a chain mesh 5 that is completed and ready for the assembly.

Furthermore, thanks to the described configuration that does not provide for to constrain the holding means 9 and/or 9a directly to the lower face 52 of each chain mesh 5, but provides that they are obtained on the support member 8 and in particular arranged on the vertical sides 82, 82a of the inverted-U, it is possible to make the dimension of said chain mesh 5 independent from the form and size of the holding means 9, 9a and the respective rotatable members 61, 61a. Therefore, it is possible to make chain meshes 5 having reduced widths L.

This characteristic, combined with what has heretofore described, i.e., the fact that the first and second side centering surfaces 31, 31a face the towing and connecting means 7, allows making conveyor belts 4 having a width that is even very reduced.

Therefore, since the rotatable members 61 and/or 61a are arranged in the proximity of the towing and connecting means 7, thanks to the above-mentioned position of the holding means 9, 9a, and since said rotatable members 61 and/or 61a are guided by the first and second side centering surfaces 31, 31a facing the towing and connecting means 7, it is possible to make engaging means 6 having a reduced footprint, therefore, it is possible to reduce the width L of each single chain mesh 5.

For example, said chain meshes 5 can reach widths of 40mm which can be useful to transport packages 200 having small dimensions, or allow making solutions with conveyor belts 4 positioned side-by-side for a differential transport of said packages 200.

As described above, the rotatable members 61 and/or 61a rotate about the rotational axis Z, Z' inciding the planar surface A.

According to the invention, the rotatable members 61 and 61a are inclined in a direction that is divergent from the symmetry plane X and facing from bottom to top. Therefore, the rotational axes Z, Z' of the rotatable members 61 and 61a will be inclined in a direction that is divergent from the symmetry plane X and facing from top to bottom as represented in figure 2.

Preferably, it is provided that the rotatable members 61, 61a are positioned so that the inclination between the respective rotational axis Z, Z' and the support surface 35 defines a respective angle β, β' ranging between 10° and 25°. Furthermore, preferably said inclination is 15°.

Since the axes Z and Z' are parallel to the side centering surfaces 31, 31a, the angles α and a' will be respectively equal to β and β'.

Thanks to the inclination of the rotatable members 61 and/or 61a, it is possible to optimally unload the forces acting on the engaging means 6.

In particular, in a conveyor apparatus 1 of the spiral elevator 100 type the radial component of the chain tensioner is subdivided into two components of which one is parallel and one is orthogonal to the rotational axis Z; said component parallel to the axis Z helps to keep the chain mesh 5 pushed downwards.

As a consequence of the clearances that are present among the various components, it is possible that, because of the forces present, a variety of contact situations with the guide means 3 can occur:
- the rotatable part of the upper surface 63 of the rotatable member 61 housed in the recess 36 contacts the first holding surface 32, and simultaneously it can also contact the rotatable part of the surface 64a of the rotatable member 61a housed in the recess 36a with the second holding surface 33a;
- the rotatable part of the surface 64 of the rotatable member 61 housed in the recess 36 contacts the second holding surface 33, and simultaneously it can also contact the rotatable part of the upper surface 63a of the rotatable member 61a housed in the recess 36a with the first holding surface 32a.

These contacts reduce the possible inclination of the chain meshes 5.

It can also happen that the contact takes place also between the lower face 52 of the chain meshes 5 and at least one between the first and/or second outer protrusions 3e and 3f, or the first and/or second side protrusions 3c and 3d. These contacts prevent an excessive deformation of the chain meshes 5 subjected to working forces.

Therefore, different contact situations can occur, both simultaneous or alternative according to the loads, the tolerances and the deformability of the materials involved.

In accordance with a further aspect of the invention the rotatable members 61 and/or 61a and the towing and connecting means 7 are arranged at about the same distance from the lower face 52 of each chain mesh 5.

Thanks to this solution the flexural stresses acting on the conveyor belt 4 are reduced, reducing the arm on which the radial components of the load forces work.

## Claims

1. A conveyor apparatus (1) for transporting packages (200) along a respective conveying path, comprising:
- a frame (2)
- guide means (3) which are suitable to be supported by said frame (2),
- a conveyor belt (4) suitable to transport the packages (200), which is slidably supported on said guide means (3), said conveyor belt (4) comprising,
- engaging means (6) slidable on said guide means (3) and comprising a first rotatable member (61) and a second rotatable member (61a),
- a plurality of chain meshes (5) mutually connected in an articulated manner through corresponding towing and connecting means (7), where each chain mesh (5) of the conveyor belt (4) extends transversally and has a respective upper face (51), defining a substantially planar surface (A) suitable to receive the packages (200),
said conveyor apparatus (1) being **characterized in that** the guide means (3) comprise a support surface (35) facing upwardly, parallel to the surface (A), configured to engage with the towing and connecting means (7) and suitable to support said conveyor belt (4), and at least a first side centering surface (31) suitable to engage the first rotatable member (61), which first side centering surface (31) faces the support surface (35) with which it defines an angle (α), said guide means (3) comprise a second side centering surface (31a) defining a respective angle (α') with said support surface (35), which is provided for on the side of the towing and connecting means (7) which is opposite the one of the first side centering surface (31) and cooperating with a corresponding second rotatable member (61a) which is provided for on the same engaging means (6) on the side opposite the one of said first rotatable member (61) with respect to the towing and connecting means (7), and said rotatable members (61, 61a) are inclined in a direction that is divergent from the symmetry plane (X) of the chain meshes (5) and facing from bottom to top, wherein respective rotational axes (Z, Z') of the respective first and second rotatable member (61, 61a) are inclined in a direction that is divergent from the symmetry plane (X) from top to bottom.

2. The apparatus (1) according to one of the preceding claims, wherein the angle (α') defined by said second side centering surface (31a) with said support surface (35) is equal and oriented with respect thereto in an opposite manner to the angle (α) that said first side centering surface (31) has with the same support surface (35), and said angles (α, α') are oriented so as to exert on the respective chain mesh (5) a further holding action in a perpendicular direction towards said support surface (35).

3. The apparatus (1) according to one of the preceding claims, wherein said first and second side centering surface (31, 31a) is parallel to a rotational axis (Z, Z') of the respective first and second rotatable member (61, 61a) and configured to cooperate with a rotatable surface (62, 62a) of the first and/or second rotatable members (61, 61a).

4. The apparatus (1) according to one of the preceding claims, wherein the rotatable members (61, 61a) are positioned so that the inclination between the respective rotational axis (Z, Z') and the support surface 35, defines a respective angle (β, β') ranging between 10° and 25°.

5. The apparatus (1) according to claim 2, wherein the second rotatable member (61a) is arranged in symmetric position with respect to the first rotatable member (61) with respect to the symmetry plane (X) of the chain meshes (5).

6. The apparatus (1) according to one of the preceding claims, wherein said guide means (3) are defined by a corresponding body (3') having a lower base (3a), from which a central protrusion (3b) defining said support surface (35) and at least one first side protrusion (3c) defining the side centering surface (31) extend.

7. The apparatus (1) according to claim 6, wherein the body (3') of said guide means (3) has a second side protrusion (3d) defining the second side centering surface (31a) which is provided for on the side of said central protrusion (3b) which is opposite the one of said first side protrusion (3c).

8. The apparatus (1) according to one of the claims 6 or 7, wherein said lower base (3a) of the body (3') is in the form of a plane-like member.

9. The apparatus (1) according to one of the claims 6 to 8, wherein the respective first and/or second side centering surfaces (31, 31a) are defined at a portion of the respective first and/or second side protrusions (3c, 3d) which is a recess (36, 36a) of a respective inner face (37, 37a) of the same first and/or second side protrusions (3c, 3d), facing said central protrusion (3b).

10. The apparatus (1) according to claim 9, wherein the recess (36, 36a) is configured to house a portion of the rotatable member (61, 61a), said recess (36, 36a) that comprises at least a first holding surface (32, 32a) inciding the first and second side centering surfaces (31, 31a), respectively, and facing downwards and in proximity of an upper surface (63, 63a) of the corresponding first and second rotatable members (61, 61a).

11. The apparatus (1) according to one of the claims 9 or 10, wherein the recess (36, 36a) further comprises a second holding surface (33, 33a) inciding the first and second side centering surfaces (31, 31a), respectively, and facing upwardly and in proximity of a lower surface (64, 64a) of the corresponding first and second rotatable members (61, 61a).

12. The apparatus (1) according to one of the claims 9 to 11, wherein the first holding surface (32, 32a) and/or the second holding surface (33, 33a) is orthogonal to the respective first and second side centering surfaces (31, 31a).

13. The apparatus (1) according to one of the claims 10 to 12, wherein the first and/or second holding surfaces (32, 32a, 33, 33a) are configured to contact a rotatable portion of the upper (63, 63a) and lower (64, 64a) surfaces of the corresponding first and second rotatable members (61, 61a).

## Patentansprüche

1. Fördervorrichtung (1) zum Transportieren von Packungen (200) entlang einer jeweiligen Transportstrecke, umfassend:
- einen Rahmen (2),
- Führungsmittel (3), die geeignet sind, vom Rahmen (2) getragen zu werden,
- ein Förderband (4) zum Transport der Packungen (200), das gleitend auf der Führungsmittel (3) gelagert ist, wobei das Förderband (4) umfasst:
- Kopplungsmittel (6), die auf dem Führungsmittel (3) gleiten und ein erstes Drehelement (61) und ein zweites Drehelement (61a) umfassen,
- eine Vielzahl von Kettengliedern (5) die mit entsprechenden Antriebs- und Verbindungsmittel (7) gelenkig miteinander verbunden sind, wobei jedes Kettenglied (5) des Förderbandes (4) quer verläuft und jeweils eine Oberseite (51) aufweist, die eine im Wesentlichen flache Oberfläche (A) definiert, die zur Aufnahme der Packungen (200) geeignet ist,
wobei die Fördervorrichtung (1) **dadurch gekennzeichnet ist, dass** die Führungsmittel (3) eine Stützfläche (35) umfassen, die parallel zur Oberfläche (A) nach oben weist und konfiguriert ist, um mit den Antriebs- und Verbindungsmitteln (7) gekoppelt zu werden, und geeignet ist, das Förderband (4) abzustützen und mit mindestens einer ersten seitlichen Zentrierfläche (31), die zur Kopplung mit dem ersten Drehelement (61) geeignet ist, wobei die erste seitliche Zentrierfläche (31) auf die Stützfläche (35) gerichtet ist, mit der sie einen Winkel (α) definiert, wobei das Führungsmittel (3) eine zweite seitliche Zentrierfläche (31a) umfasst, die jeweils einen Winkel (α') mit der Stützfläche (35) definiert, die auf der Seite der Antriebs- und Verbindungsmittel (7) angeordnet ist, die der ersten seitlichen Zentrierfläche (31) gegenüberliegt und mit einem entsprechenden zweiten Drehelement (61a) zusammenwirkt, das an den selben Kopplungsmitteln (6) auf der einem ersten Drehelement (61) gegenüberliegenden Seite ausgebildet ist mit Bezug auf die Antriebs- und Verbindungsmittel (7), wobei die Drehelemente (61, 61a) in einer von der Symmetrieebene (X) der Kettenglieder (5) abweichenden Richtung von unten nach oben geneigt sind, wobei jeweilige Drehachsen (Z, Z') der jeweiligen ersten und zweiten Drehelemente (61, 61a) in einer von der Symmetrieebene (X) abweichenden Richtung von oben nach unten geneigt sind.

2. Vorrichtung (1) nach einem der vorhergehenden Ansprüche, wobei der von der zweiten seitlichen Zentrierfläche (31a) mit der Stützfläche (35) gebildete Winkel (α') gleich ist und gegenüber dieser in einen entgegengesetzten Winkel (α) ausgerichtet, den die erste seitliche Zentrierfläche (31) mit derselben Stützfläche (35) bildet, und die Winkel (α, α') so ausgerichtet sind, dass sie auf das jeweilige Kettenglied (5) mit einer weiteren Stützwirkung in einer Richtung senkrecht zur Auflagefläche (35) wirken.

3. Vorrichtung (1) nach einem der vorhergehenden Ansprüche, wobei die ersten und zweiten seitlichen Zentrierflächen (31, 31a) parallel zu einer Drehachse (Z, Z') des jeweiligen ersten und zweiten Drehelements (61, 61a) sind und dazu konfiguriert sind, mit einer rotierenden Oberfläche (62, 62a) des ersten und/oder zweiten rotierenden Elements (61, 61a) zusammenzuwirken.

4. Vorrichtung (1) nach einem der vorhergehenden Ansprüche, wobei die Drehelemente (61, 61a) so positioniert sind, dass die Neigung zwischen der jeweiligen Drehachse (Z, Z') und der Auflagefläche 35 einen jeweiligen zwischen 10° und 25° variablen Winkel (β, β') definiert.

5. Vorrichtung (1) nach Anspruch 2, wobei das zweite Drehelement (61a) symmetrisch zum ersten Drehelement (61) in Bezug auf die Symmetrieebene (X) der Kettenglieder (5) angeordnet ist.

6. Vorrichtung (1) nach einem der vorhergehenden Ansprüche, wobei die Führungsmittel (3) durch einen entsprechenden Körper (3) definiert sind, der mit einer unteren Basis (3a) versehen ist, von der sich ein zentraler Vorsprung (3b) erstreckt, die die Stützfläche (35) definiert, und mindestens einen ersten seitlichen Vorsprung (3c) aufweist, der die seitliche Zentrierfläche (31) definiert.

7. Vorrichtung (1) nach Anspruch 6, wobei der Körper (3') des Führungsmittels (3) einen zweiten seitlichen Vorsprung (3d) aufweist, der die zweite seitliche Zentrierfläche (31a) definiert, die auf der Seite des zentralen Vorsprungs (3b) ausgebildet ist, die dem ersten seitlichen Vorsprung (3c) gegenüberliegt.

8. Vorrichtung (1) nach einem der Ansprüche 6 oder 7, wobei die untere Basis (3a) des Körpers (3') die Form eines ebenähnlichen Elements aufweist.

9. Vorrichtung (81) nach einem der Ansprüche 6 bis 8, wobei die jeweiligen ersten und/oder zweiten seitlichen Zentrierflächen (31, 31a) auf einem Teil der jeweiligen ersten und/oder zweiten seitlichen Vorsprünge (3c, 3d) definiert sind, der einen Hohlraum (36, 36a) einer jeweiligen Innenfläche (37, 37a) derselben ersten und/oder zweiten seitlichen Vorsprünge (3c, 3d) aufweist, der dem zentralen Vorsprung (3b) zugewandt ist.

10. Vorrichtung (1) nach Anspruch 9, wobei der Hohlraum (36, 36a) zur Aufnahme eines Teils des Drehelements (61, 61a) ausgebildet ist, wobei der Hohlraum (36, 36a) mindestens eine erste Stützfläche (32) aufweist (32a) aufweist, die jeweils die ersten und zweiten entsprechenden seitlichen Zentrierflächen (31, 31a) schneidet und nach unten gerichtet ist und sich im Bereich einer Oberfläche (63, 63a) der entsprechenden ersten und zweiten Drehelemente (61, 61a) befindet.

11. Vorrichtung (1) nach einem der Ansprüche 9 oder 10, wobei der Hohlraum (36, 36a) außerdem eine zweite Stützfläche (33, 33a) umfasst, die die erste bzw. zweite entsprechende seitliche Zentrierfläche (31, 31a) schneidet, und nach oben gerichtet ist und sich im Bereich einer unteren Oberfläche (64, 64a) der entsprechenden ersten und zweiten rotierenden Elemente (61, 61a) befindet.

12. Vorrichtung (1) nach einem der Ansprüche 9 bis 11, wobei die erste Stützfläche (32, 32a) und/oder die zweite Stützfläche (33, 33a) senkrecht zu der jeweiligen ersten und zweiten Zentrierfläche (31, 31a) stehen.

13. Vorrichtung (1) nach einem der Ansprüche 10 bis 12, wobei die ersten und/oder zweiten Stützflächen (32, 32a, 33, 33a) so konfiguriert sind, dass sie mit einem rotierenden Teil der oberen (63, 63a) und unteren (64, 64a) Oberflächen der entsprechenden ersten und zweiten rotierenden Elemente (61, 61a) in Kontakt kommen.

## Revendications

1. Dispositif transporteur (1) pour transporter des paquets (200) le long d'un trajet de transport respectif, comprenant:
- un châssis (2),
- des moyens de guidage (3) aptes à être supportés par le châssis (2),
- une bande transporteuse (4) adaptée pour transporter les paquets (200), qui est supportée de manière coulissante sur les moyens de guidage (3), la bande transporteuse (4) comprenant,
- des moyens d'accouplement (6) coulissant sur les moyens de guidage (3) et comprenant un premier élément rotatif (61) et un deuxième élément rotatif (61a),
- une pluralité de maillons de chaîne (5) reliés les uns aux autres de manière articulée per des moyens d'entraînement et de liaison correspondants (7), dans lequel chaque maillon de chaîne (5) de la bande transporteuse (4) s'étend transversalement et présente une surface supérieure respective (51), qui définit une surface sensiblement plane (A), apte à recevoir les paquets (200),
le dispositif transporteur (1) étant **caractérisé en ce que** les moyens de guidage (3) comprennent une surface d'appui (35) tournée vers le haut parallèlement à la surface (A), configurée pour s'accoupler avec les moyens d'entraînement et de liaison (7) et apte à supporter le bande transporteuse (4), et au moins une première surface latérale de centrage (31), apte à s'accoupler avec le premier élément rotatif (61), la première surface latérale de centrage (31) étant dirigée vers la surface d'appui (35) avec laquelle elle définit un angle (α), le moyen de guidage (3) comprenant une deuxième surface latérale de centrage (31a) qui définit un angle respectif (α') avec la surface d'appui (35), laquelle est agencée du côté des moyens d'entraînement et de liaison (7) qui est opposé à la première surface latérale de centrage (31) et coopère avec un deuxième élément rotatif correspondant (61a) qui est agencé sur les mêmes moyens d'accouplement (6) du côté opposé à un premier élément rotatif (61) par rapport aux moyens d'entraînement et de liaison (7), et les éléments rotatifs (61, 61a) sont inclinés dans une direction divergente du plan de symétrie (X) des maillons de chaîne (5) et orientés de bas en haut, dans lequel les axes de rotation respectifs (Z, Z') des premiers et deuxièmes éléments rotatifs respectifs (61, 61a) sont inclinés dans une direction qui est divergente du plan de symétrie (X) de haut en bas.

2. Dispositif (1) selon l'une des revendications précédentes, dans lequel l'angle (α') défini par la deuxième surface latérale de centrage (31a) avec la surface d'appui (35) est égal et est orienté par rapport à cette dernière dans une manière opposée à l'angle (α) que forme la première surface latérale de centrage (31) avec la même surface d'appui (35), et les angles (α, α') sont orientés de manière à appliquer sur le maillon de chaîne respectif (5) une ultérieure action d'arrêt dans une direction perpendiculaire à la surface de support (35).

3. Dispositif (1) selon l'une des revendications précédentes, dans lequel les première et deuxième surfaces latérales de centrage (31, 31a) sont parallèles à un axe de rotation (Z, Z') des premier et deuxième éléments rotatifs respectifs (61, 61a) et sont configurées pour coopérer avec une surface rotative (62, 62a) du premier et/ou du deuxième élément rotatif (61, 61a) .

4. Dispositif (1) selon l'une des revendications précédentes, dans lequel les éléments rotatifs (61, 61a) sont positionnés de sorte que l'inclinaison entre l'axe de rotation respectif (Z, Z') et la surface d'appui 35, définit un angle respectif (β, β') variable entre 10° et 25°.

5. Dispositif (1) selon la revendication 2, dans lequel le deuxième élément rotatif (61a) est disposé symétriquement par rapport au premier élément rotatif (61) par référence au plan de symétrie (X) des maillons de chaîne (5).

6. Dispositif (1) selon l'une des revendications précédentes, dans lequel les moyens de guidage (3) sont définis par un corps correspondant (3) pourvu d'une base inférieure (3a), à partir de laquelle s'étend une saillie centrale (3b) qui définit la surface d'appui (35) et au moins une première saillie latérale (3c) qui définit la surface latérale de centrage (31).

7. Dispositif (1) selon la revendication 6, dans lequel le corps (3') du moyen de guidage (3) présente une deuxième saillie latérale (3d) qui définit la deuxième surface latérale de centrage (31a) qui est agencée du côté de la saillie centrale (3b) qui est opposée à la première saillie latérale (3c).

8. Dispositif (1) selon l'une des revendications 6 ou 7, dans lequel la base inférieure (3a) du corps (3') a la forme d'un élément égal à un plan.

9. Dispositif (1) selon l'une des revendications 6 à 8, dans lequel les première et/ou deuxième surfaces de centrage latérales respectives (31, 31a) sont définies sur une partie des première et/ou deuxième saillies latérales respectives (3c, 3d), qui est une cavité (36, 36a) d'une surface intérieure respective (37, 37a) des mêmes première et/ou deuxième saillies latérales (3c, 3d), faisant face à la saillie centrale (3b).

10. Dispositif (1) selon la revendication 9, dans lequel la cavité (36, 36a) est configurée pour loger une partie de l'élément rotatif (61, 61a), la cavité (36, 36a) comprenant au moins une première surface d'appui (32, 32a) qui croise les première et deuxième surfaces latérales de centrage (31, 31a) respectivement, et fait face vers le bas et à proximité d'une surface supérieure (63, 63a) des premier et deuxième éléments rotatifs correspondants (61, 61a).

11. Dispositif (1) selon l'une des revendications 9 ou 10, dans lequel la cavité (36, 36a) comprend en outre une deuxième surface d'appui (33, 33a) qui croise respectivement les première et deuxième surfaces de centrage latérales (31, 31a), et est tournée vers le haut et à proximité d'une surface inférieure (64, 64a) des premier et deuxième éléments rotatifs correspondants (61, 61a).

12. Dispositif (1) selon l'une des revendications 9 à 11, dans lequel la première surface d'appui (32, 32a) et/ou la deuxième surface d'appui (33, 33a) sont perpendiculaires aux respectives première et deuxième surfaces de centrage (31, 31a).

13. Dispositif (1) selon l'une des revendications 10 à 12, dans lequel les première et/ou deuxième surfaces d'appui (32, 32a, 33, 33a) sont configurées pour venir en contact avec une partie rotative des surfaces supérieures (63, 63a) et inférieures (64, 64a) des premier et deuxième éléments rotatifs correspondants (61, 61a).
